# EUROPÄISCHE PATENTSCHRIFT

(11) **EP 2 078 600 B1**
(45) Veröffentlichungstag und Bekanntmachung des Hinweises auf die Patenterteilung: **21.09.2011**
(21) Anmeldenummer: 08000465.8
(22) Anmeldetag: 11.01.2008
(51) Int. Cl.: B29C 33/12, B29C 45/14

(54) **Vorrichtung und Verfahren zum Herstellen eines Rotationskörpers im Gussverfahren**
Method and device for manufacturing a rotating body in casting
Dispositif et procédé destinés à fabriquer un corps de rotation dans le procédé de coulée

(43) Veröffentlichungstag der Anmeldung: 15.07.2009
(73) Patentinhaber: Gebr. Schwarz GmbH, 78628 Rottweil-Neukirch (DE)
(72) Erfinder: Schwarz, Uwe, 78628 Rottweil-Neukirch (DE)
(74) Vertreter: Patentanwälte Westphal, Mussgnug & Partner

(56) Entgegenhaltungen:
- EP-A- 1 083 035
- EP-A- 1 652 647
- JP-A- 5 116 186
- JP-A- 2002 283 400
- US-A- 5 409 656

## Beschreibung

Die Erfindung betrifft eine Vorrichtung und ein Verfahren zum Herstellen eines Rotationskörpers im Gussverfahren.

Bekannt ist es, Rotationskörper dadurch herzustellen, dass der entsprechende Werkstoff in flüssiger oder pastöser Form in eine Vorrichtung zum Herstellen eines Rotationskörpers, insbesondere in eine Werkzeugform, gefüllt wird. Durch die Form der Vorrichtung ist in der Vorrichtung die Rotationsasche des Rotationskörpers definiert.

Unter einem Rotationskörper wird dabei im Folgenden ein Körper verstanden, der um eine Rotationsachse rotiert. Der Rotationskörper muss nicht rotationssymmetrisch sein, und die Rotationsachse muss nicht identisch mit einer gegebenenfalls vorhandenen Symmetrieachse des Rotationskörpers sein. In der Regel weisen die Rotationskörper eine Außenkontur auf, die durch Rotation einer Kontur um eine Achse gebildet ist, beispielsweise eine kreisrunde Außenkontur, wobei die Achse nicht notwendigerweise die Achse ist, um die der Rotationskörper letztendlich im Betriebszustand rotiert. Als Rotationsachse wird somit die Achse bezeichnet, um die der Rotationskörper im Betriebszustand rotiert, welche nicht identisch mit einer gegebenenfalls vorhandenen Symmetrieachse des Rotationskörpers sein muss.

Bei den im Gussverfahren hergestellten Rotationskörpern handelt es sich beispielsweise um Räder, Lüfterräder, Ventilatoren oder Ähnliches. Die bekannten Vorrichtungen zum Herstellen derartiger Rotationskörper sind derart ausgebildet, dass die Vorrichtung bereits die Rotationsachse der Rotationskörper definieren, beispielsweise die Vorrichtung eine derartige Form aufweist, dass mittig in dem Rotationskörper eine Durchgangsöffnung angeordnet ist, mit welcher der Rotationskörper über eine Achse, beispielsweise eine Welle, geschoben werden kann, oder indem in der Vorrichtung durch sonstige entsprechende Formgebung der Rotationskörper eine Rotationsachse erhält. Insbesondere ist es auch bekannt, in die Vorrichtung Zentralelemente einzulegen, die im Gussverfahren umgossen werden, und über welche der Rotationskörper auf einer Antriebsachse oder Welle montiert werden kann. Das Zentralelement ist dabei in der Regel mit einer entsprechenden Durchgangsöffnung ausgestattet, die somit insbesondere durch ihre Längsachse die Rotationsachse des Rotationskörpers definiert.

Nachteilig bei den bekannten Vorrichtungen und Verfahren zum Herstellen von Rotationskörpern im Gussverfahren ist, dass die Vorrichtungen in der Regel nie vollständig symmetrisch um die Rotationsachse ausgebildet sind oder sich das Material nicht gleichmäßig in der Vorrichtung verteilt, sodass der hergestellte Rotationskörper eine Unwucht, das heißt eine nicht rotationssymmetrisch um die Rotationsachse verteilte Masse aufweist. In einem nachfolgenden Verfahrensschritt müssen daher die Rotationskörper durch Gegengewichte ausgewuchtet werden, da ansonsten die Unwuchten zu Vibrationen und erhöhtem Verschleiß führen. Ein derartiges Verfahren ist jedoch zeit- und kostenintensiv.

Die US 5 409 A wird als weiterer Stand der Technik genannt, und offenbart den Oberbegriff von Anspruch 1.

Die Aufgabe der Erfindung besteht daher darin, eine Vorrichtung und ein Verfahren zum Herstellen eines Rotationskörpers im Gussverfahren bereitzustellen, welche das Herstellen von Rotationskörpern ermöglicht, die keine oder kaum eine Unwucht aufweisen.

Die Erfindung beruht auf der Erkenntnis, dass bei im Wesentlichen gleichen Bedingungen für ein Gussverfahren, das heißt bei Befüllen derselben Werkzeugform mit im Wesentlichen identischem Material bei etwa gleichen Temperaturbedingungen, die Unwucht des so hergestellten Rotationskörpers immer an der gleichen Stelle des Rotationskörpers auftritt.

Die erfindungsgemäße Vorrichtung zum Herstellen eines Rotationskörpers im Gussverfahren sieht somit Mittel zur Variation der Position der Rotationsachse in der Vorrichtung vor. Durch derartige Mitteln wird es ermöglicht, die Position der Rotationsachse des hergestellten Rotationskörpers derart zu verschieben, dass die Unwucht ausgeglichen wird und eine rotationssymmetrische Massenverteilung im Hinblick auf die Rotationsachse erreicht wird. Nach einmaligem Herstellen eines Test-Rotationskörpers in der Vorrichtung, welche zunächst eine Rotationsachse in einer Ausgangsposition vorsieht, und Vermessen dieses Test-Rotationskörpers im Hinblick auf die Unwucht, ist es somit möglich, die Vorrichtung mit den Mitteln zur Variation der Position der Rotationsachse derart einzustellen, dass die nachfolgend in der Vorrichtung hergestellten Rotationskörper keine oder nahezu keine Unwucht mehr aufweisen. Die aufwändigen anschließenden Verfahrensschritte zum Auswuchten der Rotationskörper durch Gegengewichte können somit vollständig entfallen.

Vorzugsweise ist die Rotationsachse des Rotationskörpers durch ein zu umgießendes Zentralelement definiert, welches in die Vorrichtung eingesetzt und mit den Mitteln zur Variation der Position der Rotationsachse gekoppelt ist. Auf diese Art und Weise wird einerseits die Rotationsachse des Rotationskörpers zuverlässig definiert, kann jedoch andererseits auf einfache Art und Weise variiert werden.

Gemäß der Erfindung sind die Mittel zu Variation der Position der Rotationsachse als Kreuzschlitten mit einem ersten Linearschlitten und einem zweiten Linearschlitten ausgebildet, wobei die Rotationsachse oder das die Rotationsachse definierende Zentralelement mit einem der beiden Linearschlitten gekoppelt ist. Über einen Kreuzschlitten kann in einem kartesischen Koordinatensystem im Rahmen der Reichweite der Linearschlitten jede beliebige Position angesteuert werden, sodass eine möglichst einfache, aber genaue Variation der Position der Rotationsachse möglich ist.

Gemäß der Erfindung weisen die Mittel einen Winkelring mit einer ersten exzentrischen Bohrung, einen in der ersten exzentrischen Bohrung des Winkelrings drehbar gelagert angeordneten Exzenterring mit einer zweiten exzentrischen Bohrung und einen in der zweiten exzentrischen Bohrung des Exzenterrings drehbar gelagert angeordneten Aufnahmeeinsatz auf. Vorzugsweise definiert der Aufnahmeeinsatz, beispielsweise durch seine Längsachse, die Rotationsachse. Bei Drehung des Exzenterrings in der ersten exzentrischen Bohrung des Winkelrings und Drehung des Winkelrings kann ebenfalls auf einfache Art und Weise die Position der Rotationsachse auf jeden beliebigen Punkt eines kartesischen Koordinatensystems im Rahmen der Reichweite, die durch die Maße der ersten und zweiten exzentrischen Bohrungen und die Größe der Exzentrizität der Bohrungen vorgegeben ist, variiert werden.

Vorzugsweise ist der Exzenterring im dem Winkelring und der Aufnahmeeinsatz in dem Exzentrring formschlüssig angeordnet, sodass keine unnötigen Ritzen oder Spalte entstehen, in welche das in die Vorrichtung eingebrachte Material zum Herstellen der Rotationskörper dringen könnte.

Vorzugsweise ist der Aufnahmeeinsatz zur Halterung des Zentralelements ausgebildet, um auf diese Weise die Rotationsachse zu definieren und eine einfache Kopplung zwischen der Rotationsachse und den Mitteln zur Variation der Position der Rotationsachse herzustellen.

Besonders bevorzugt ist der Aufnahmeeinsatz mit einem Linearschlitten gekoppelt, wobei der Linearschlitten eine Nut quer zur Bewegungsrichtung des Linearschlittens aufweist, in welcher ein Vorsprung des Aufnahmeeinsatzes gegen Rotation gesichert und entlang der Nut linear verschiebbar eingreift. Auf diese Art und Weise ist sichergestellt, dass der Aufnahmeeinsatz zwar an jede beliebige Position im Rahmen der Reichweite der Mittel bewegt werden kann, andererseits jedoch der Aufnahmeeinsatz keine Rotation um die eigene Längsachse durchführen kann, sodass insbesondere bei Anordnung des Zentralelements auf dem Aufnahmeeinsatz stets gleichbleibende Bedingungen und insbesondere eine gleichbleibende Orientierung des Zentralelements für die Herstellung des Rotationskörpers im Gussverfahren gewährleistet sind.

Die erfindungsgemäße Vorrichtung wird besonders bevorzugt in einem Verfahren zum Herstellen eines Rotationskörpers im Gussverfahren, insbesondere im Kunststoffspritzgussverfahren verwendet.

Das erfindungsgemäße Verfahren unter Verwendung der Vorrichtung nach einem der Ansprüche 1 bis 7 zum Herstellen eines Rotationskörpers im Gussverfahren weist die folgenden Schritte auf. Zunächst wird im Gussverfahren ein Testrotationskörper in einer Vorrichtung zum Herstellen eines Rotationskörpers hergestellt, wobei in der Vorrichtung eine Rotationsachse des Rotationskörpers definiert ist und als Position der Positionsachse des Testrotationskörpers eine Ausgangsposition gewählt wird. Der so hergestellte Testrotationskörper wird anschließend im Hinblick auf sein Unwucht analysiert. Anschließend wird in der Vorrichtung zum Herstellen des Rotationskörpers die Position der Rotationsachse derart variiert, dass die Unwucht des Test-rotationskörpers ausgeglichen wird, das heißt insbesondere eine rotationssymmetrische Massenverteilung um die angepasste Position der Rotationsachse in der Vorrichtung erreicht wird. Anschließend wird der Rotationskörper im Gussverfahren in der Vorrichtung mit der angepassten Position der Rotationsachse hergestellt. Bei dem so hergestellten Rotationskörper ist ein nachträgliches Auswuchten nicht mehr von Nöten, da dieser Rotationskörper bereits eine rotationssymmetrisch um die Rotationsachse angeordnete Masseverteilung aufweist. Besonders bevorzugt werden in der Vorrichtung mit angepasster Position der Rotationsachse mehrere Rotationskörper hergestellt, ohne dass die Herstellung weiterer Testrotationskörper von Nöten ist.

Gemäß einer besonders bevorzugten Ausführungsform der Erfindung wird zum Herstellen des Rotationskörpers ein die Rotationsachse des Rotationskörpers definierendes Zentralelement umspritzt, wobei zur Variation der Position der Rotationsachse die Position des Zentralelements variiert wird. Auf diese Art und Weise wird eine genaue und einfache Definition der Rotationsachse und eine genaue Variation der Position der Rotationsachse ermöglicht.

Vorzugsweise erfolgt das Herstellen des Testrotationskörpers und das Herstellen des wenigstens ein oder mehrerer Rotationskörper abgesehen von der geänderten Position der Rotationsachse unter im Wesentlichen gleichen Bedingungen, beispielsweise unter der Verwendung gleichen Materials bei gleichen Temperaturbedingungen. Dadurch wird gewährleistet, dass die Unwucht, die der Testrotationskörper aufweist, bei der Herstellung der Rotationskörper vollständig ausgeglichen wird.

Besonders bevorzugt wird als Gussverfahren ein kostengünstiges Kunststoffspritzgussverfahren verwendet.

In dem erfindungsgemäßen Verfahren wird besonders bevorzugt die erfindungsgemäße Vorrichtung zur Variation der Position der Rotationsachse verwendet.

Ein Ausführungsbeispiel der Erfindung wird anhand der nachfolgenden Figuren ausführlich erläutert. Es zeigen
- Fig. 1:: eine Explosionsdarstellung eines Ausführungsbeispiels von Mitteln zur Variation der Position der Rotations- achse mit einem Aufnahmeeinsatz, einem Exzenterring, einem Winkelring und einem Linearschlitten,
- Fig. 2:: das Ausführungsbeispiel gemäß Figur 1 in zusammenge- setzter Form,
- Fig. 3:: einen Längsschnitt durch das Ausführungsbeispiel ge- mäß Figur 2,
- Fig. 4a:: den Aufnahmeeinsatz des Ausführungsbeispiels gemäß Figur 2 in einer Seitenansicht,
- Fig. 4b:: eine Draufsicht auf den Aufnahmeeinsatz gemäß Figur 4a,
- Fig. 4c:: einen Längsschnitt durch den Aufnahmeeinsatz gemäß Figur 4a,
- Fig. 4d:: eine perspektivische Ansicht des Aufnahmeeinsatzes gemäß Figur 4a,
- Fig. 5a:: eine perspektivische Ansicht des Exzenterrings des Ausführungsbeispiels gemäß Figur 2,
- Fig. 5b:: eine Draufsicht auf den Exzenterring gemäß Figur 5a,
- Fig. 5c:: einen Längsschnitt durch den Exzenterring gemäß Figur 5a,
- Fig. 6a:: eine perspektivische Ansicht des Winkelrings des Aus- führungsbeispiels gemäß Figur 2,
- Fig. 6b:: eine Draufsicht auf den Winkelring gemäß Figur 6a,
- Fig. 6c:: einen Längsschnitt durch den Winkelring gemäß Figur 6a,
- Fig. 7:: das Ausführungsbeispiel gemäß Figur 2 in in eine Grundplatte eingesetzter Form,
- Fig. 8:: die Grundplatte mit den Mitteln zur Variation der Po- sition der Rotationsachse gemäß Figur 7 mit einem Ro- tationskörper,
- Fig. 9:: eine Explosionsdarstellung der Figur 8,
- Fig. 10a:: eine Draufsicht auf das Ausführungsbeispiel gemäß Fi- gur 2 mit dem Exzenterring in einer ersten Position,
- Fig. 10b:: eine Draufsicht auf das Ausführungsbeispiel gemäß Fi- gur 2 mit dem Exzenterring in einer zweiten Position und
- Fig. 10c:: eine Draufsicht auf das Ausführungsbeispiel gemäß Fi- gur 2 mit dem Exzenterring in einer dritten Position.

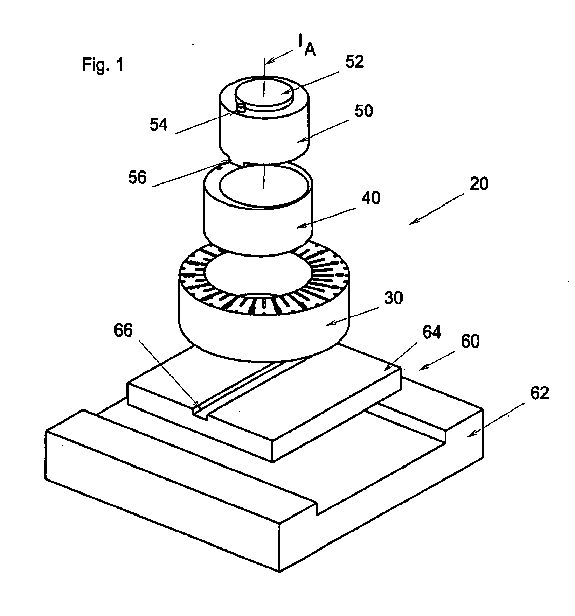

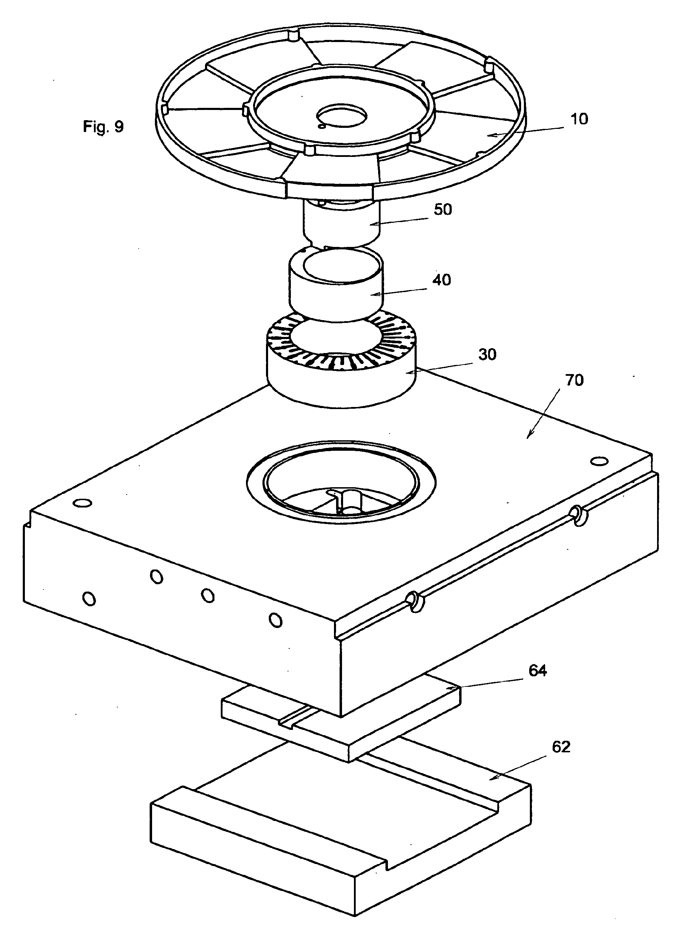

Sämtliche Figuren 1 bis 10 zeigen verschiedene Ansichten, teilweise lediglich von Komponenten eines einzigen Ausführungsbeispiels. Gleiche Komponenten sind mit gleichen Bezugszeichen gekennzeichnet. Zur besseren Übersicht sind nicht sämtliche Bezugszeichen in allen Figuren angegeben.

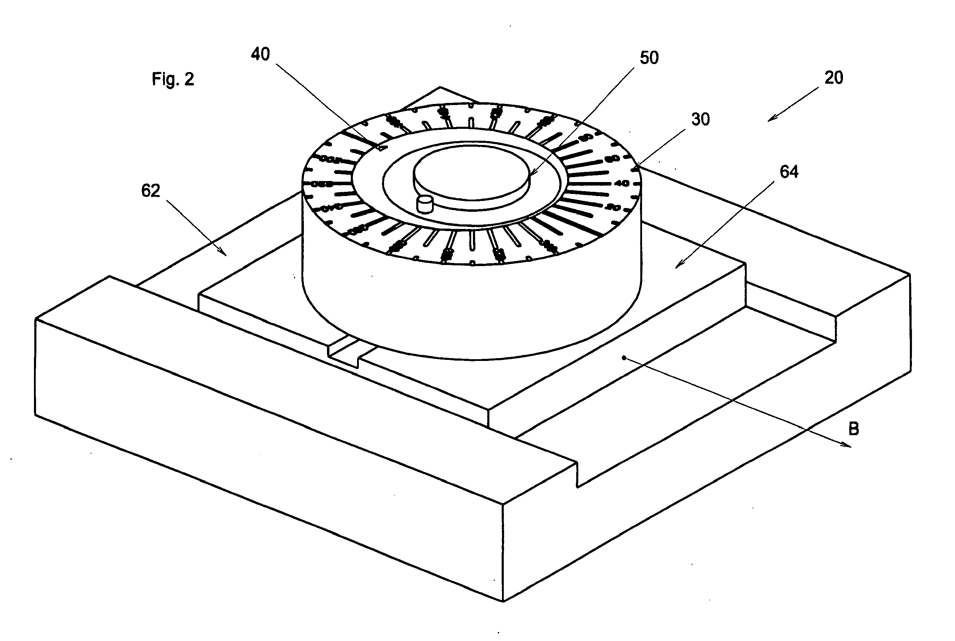

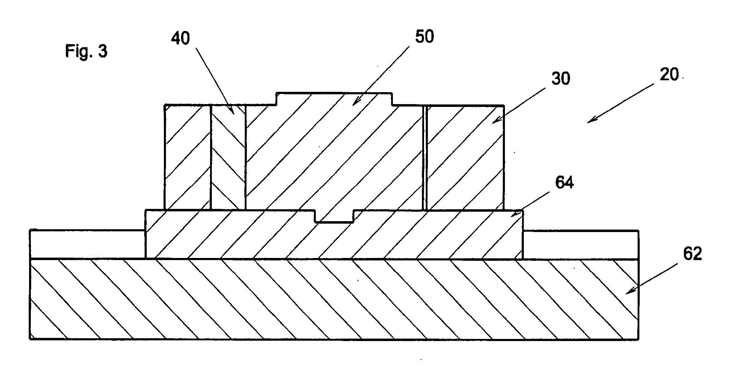

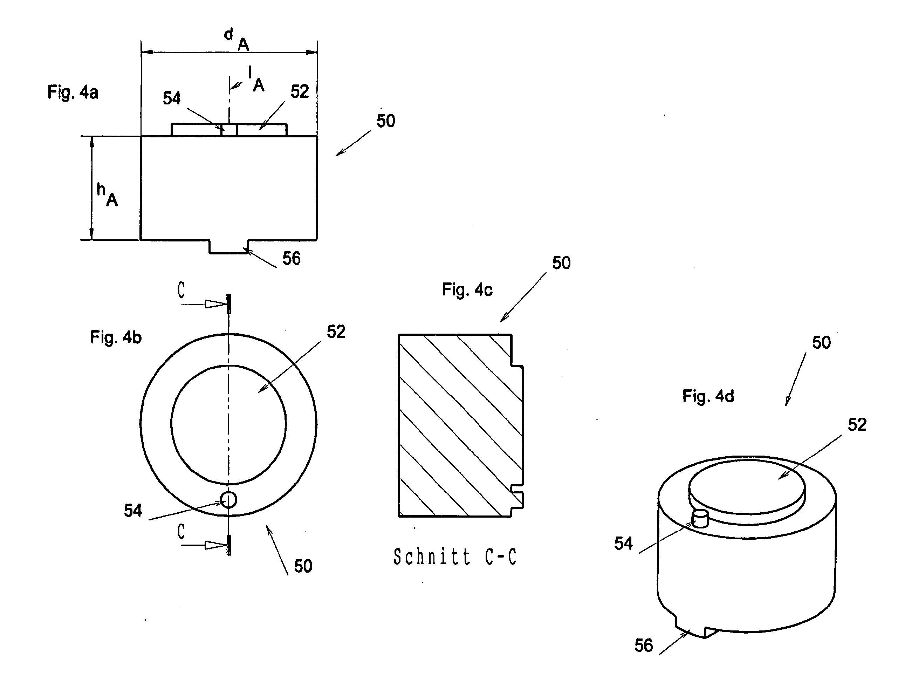

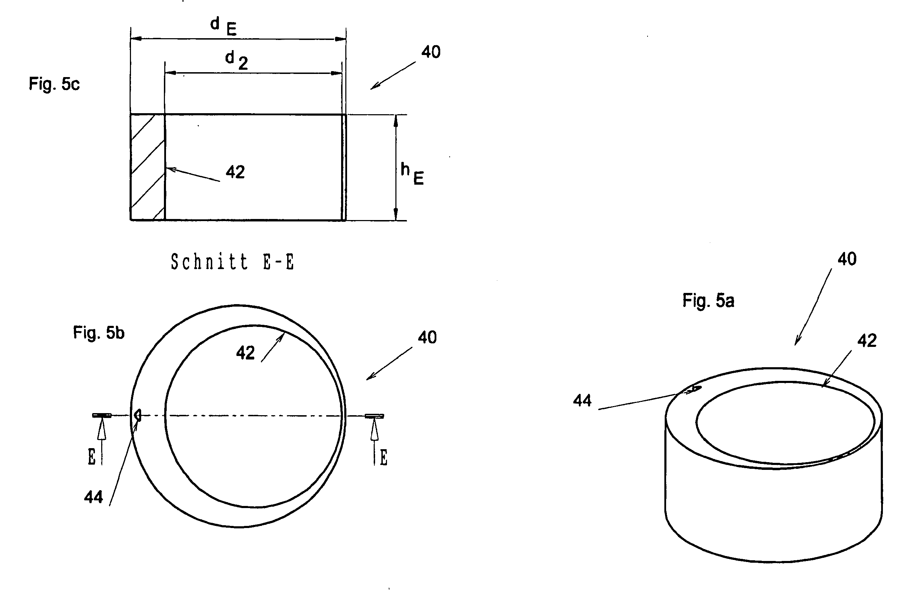

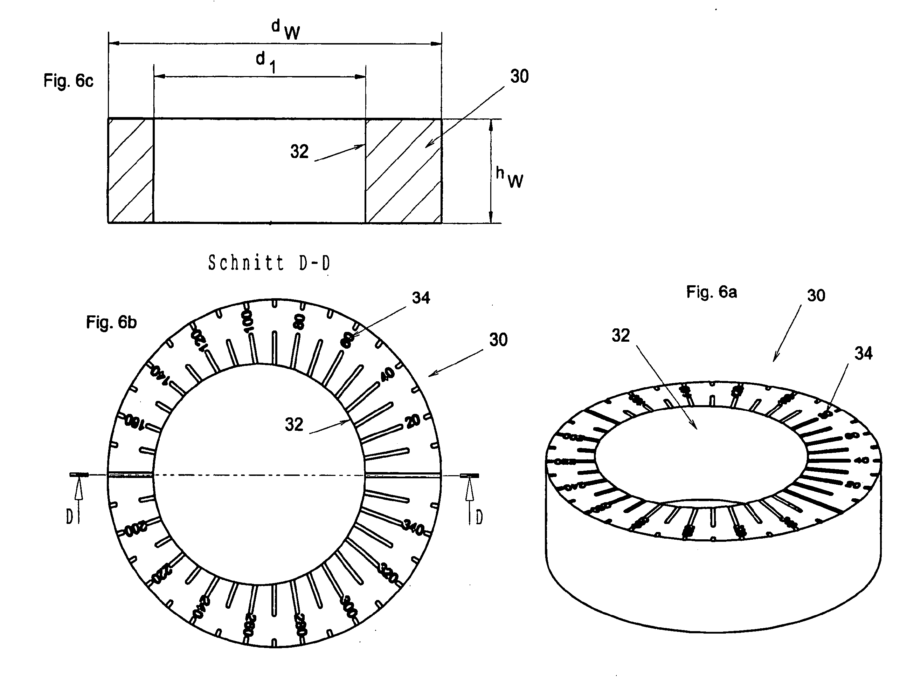

Figur 1 zeigt eine Explosionsdarstellung, Figur 2 eine perspektivische Ansicht und Figur 3 einen Längsschnitt durch ein Ausführungsbeispiel von Mitteln 20 zur Variation der Position der Rotationsachse eines Rotationskörpers in einer Vorrichtung zum Herstellen eines Rotationskörpers, insbesondere einer Werkzeugform, im Gussverfahren. Die Mittel 20 weisen einen Winkelring 30 (vergleiche Figuren 6a bis 6c), einen Exzenterring 40 (vergleiche Figuren 5a bis 5c) und einen Aufnahmeeinsatz 50 (vergleiche Figuren 4a bis 4d) auf.

Der Winkelring 30 ist als zylindrisches Element mit einem Außendurchmesser d_{w} und einer Höhe h_{w} ausgebildet und weist eine erste exzentrische Durchgangsöffnung 32 mit einem Innendurchmesser d₁ auf. Auf der Oberseite des Winkelrings 30 ist eine Winkelmarkierung 34 angegeben.

Der Exzenterring 40 ist als zylindrisches Element mit einem Außendurchmesser d_{E} und einer Höhe h_{E} ausgebildet und weist eine zweite exzentrisch angeordnete Durchgangsöffnung 42 mit einem Innendurchmesser d₂ auf. Die Höhe h_{E} des Exzenterrings 40 entspricht dabei der Höhe h_{W} des Winkelrings 30 und der Außendurchmesser d_{E} des Exzenterrings 40 entspricht dabei im Wesentlichen dem Innendurchmesser d₁ der ersten exzentrischen Durchgangsöffnung 32 des Winkelrings 30, sodass der Exzenterring 40 im Wesentlichen formschlüssig in die erste exzentrische Durchgangsöffnung 32 des Winkelrings 30 eingesetzt werden kann, wobei eine Relativdrehbewegung zwischen dem Exzenterring 40 und dem Winkelring 30 möglich ist. Auf der Oberseite des Exzenterrings 40 ist eine Markierung 44 angeordnet, welche in Kombination mit der Winkelmarkierung 34 des Winkelrings 30 die relative Position zwischen dem Exzenterring 40 und dem Winkelring 30 markiert.

Der Aufnahmeeinsatz 50 ist als zylindrisches Element mit einem Außendurchmesser d_{A} und einer Höhe h_{A} ausgebildet, wobei die Symmetrieachse des zylindrischen Elements die Längsachse l_{A} des Aufnahmeeinsatzes 50 festlegt. Der Außendurchmesser d_{A} des Aufnahmeeinsatzes 50 entspricht dem Innendurchmesser d₂ der zweiten exzentrischen Durchgangsöffnung 42 des Exzenterrings 40 und die Höhe h_{A} des Aufnahmeeinsatzes 50 entspricht der Höhe h_{E} des Exzenterrings 40, sodass der Aufnahmeeinsatz 50 im Wesentlichen formschlüssig in die zweite exzentrische Durchgangsöffnung 42 des Exzenterrings 40 eingesetzt werden kann, wobei eine Relativdrehbewegung zwischen dem Aufnahmeeinsatz 50 und dem Exzenterring 40 möglich ist. Auf der Oberseite des Aufnahmeeinsatzes 50 ist konzentrisch ein Aufnahmevorsprung 52 mit kreisförmigem Querschnitt angeordnet, welcher über die Oberseite des Aufnahmeeinsatzes 50 und somit auch über die Oberseite des Exzenterrings 40 und des Winkelrings 30 hervorsteht.

Ferner ist auf der Oberseite des Aufnahmeeinsatzes 50 ein Ausrichtvorsprung 54 exzentrisch angeordnet, welcher somit eine Orientierung des Aufnahmeeinsatzes 50 festlegt.

Auf der Unterseite des Aufnahmeeinsatzes 50 ist ein Vorsprung 56 angeordnet, welcher in eine Nut 66 einer Schlittenplatte 64 eines Linearschlittens 60 eingreift. Der Vorsprung 56 ist dabei derart ausgestaltet, dass er eine Rotationsdrehbewegung des Aufnahmeeinsatzes 50 um die Längsachse l_{A} des Aufnahmeeinsatzes 50 durch Eingriff in die Nut 66 verhindert, wobei jedoch eine Linearbewegung des Aufnahmeeinsatzes 50 entlang der Nut 66 möglich ist. Beispielsweise kann der Vorsprung 56 als diametral verlaufender Steg ausgebildet sein. Die Schlittenplatte 64 ist in einem Schlittentisch 62 in einer Bewegungsrichtung B, welche senkrecht zur Längsachse der Nut 66 verläuft, linear bewegbar.

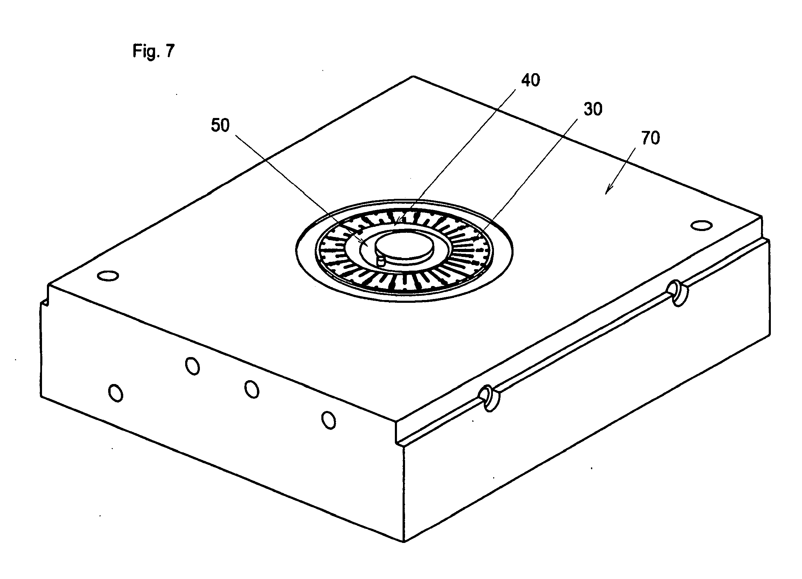

Die Mittel 20 werden, wie in Figur 7 dargestellt, in eine Grundplatte 70 einer Vorrichtung zum Herstellen eines Rotationskörpers im Gussverfahren, beispielsweise einer Werkzeugform oder einer Spritzgussform, eingesetzt. Die Oberseiten des Winkelrings 30, des Exzenterrings 40 und des Aufnahmeeinsatzes 50 bilden dabei eine ebene Auflagefläche, welche beispielsweise bündig mit der Auflagefläche der Grundplatte 70 abschließt. Es ist jedoch auch möglich, dass diese Auflagefläche um einen bestimmten Abstand über die Auflagefläche der Grundplatte 70 herausragt.

Auf diese Auflagefläche wird ein Zentralelement 15 gelegt, welches einen im Wesentlichen kreisförmigen Außenumfang aufweist und koaxial zum Außenumfang eine erste Durchgangsöffnung 17 aufweist. Exzentrisch außerhalb der ersten Durchgangsöffnung 17 ist eine zweite Durchgangsöffnung 19 als Ausrichthilfe angeordnet. Der Durchmesser der ersten Durchgangsöffnung 17 entspricht dabei im Wesentlichen dem Durchmesser des Aufnahmevorsprungs 52 des Aufnahmeeinsatzes 50, und der Durchmesser der zweiten Durchgangsöffnung 19 entspricht dabei im Wesentlichen dem Durchmesser des Ausrichtvorsprungs 54 des Aufnahmeeinsatzes 50, wobei die zweite Durchgangsöffnung 19 auch im gleichen relativen Abstand zu der ersten Durchgangsöffnung 17 angeordnet ist wie der Ausrichtvorsprung 54 zum Aufnahmevorsprung 52. Das Zentralelement 15 kann somit derart auf die Auflagefläche der Mittel 20 aufgelegt werden, dass der Aufnahmevorsprung 52 in die erste Durchgangsöffnung 17 und der Ausrichtvorsprung 54 in die zweite Durchgangsöffnung 19 eingreift. Das Zentralelement 15 ist somit in eindeutiger Weise orientiert auf der Auflagefläche der Mittel 20 angeordnet. Die Symmetrieachse der ersten Durchgangsöffnung 17 verläuft in Verlängerung der Längsachse l_{A} des Aufnahmeeinsatzes 50, welche somit eine Rotationsachse R des Zentralelements 50 und eines an dem Zentralelement 15 angeordneten Rotationskörpers 10 definiert.

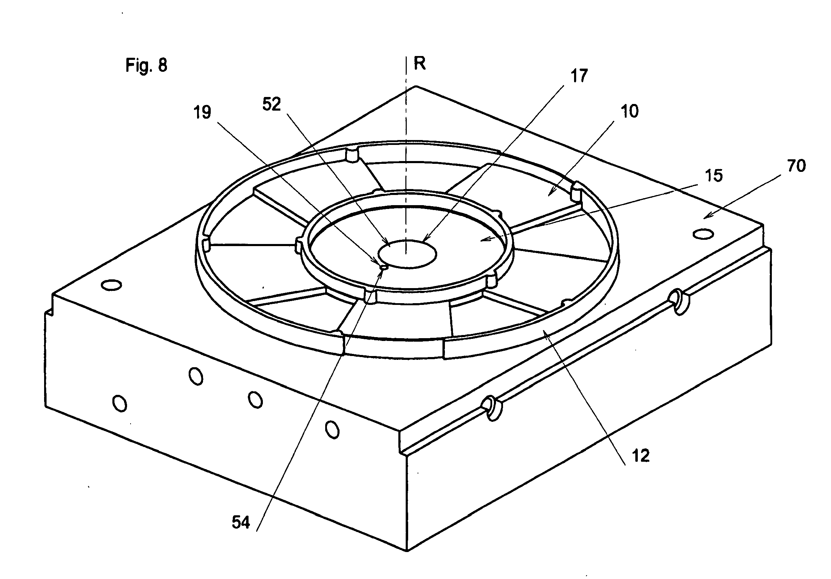

Der Rotationskörper 10 wird im Gussverfahren, insbesondere im Kunststoffspritzgussverfahren um das Zentralelement 15 gespritzt, indem ein mit der Grundplatte 70 zusammenwirkendes Element auf die Grundplatte 70 abgesenkt wird und die zwischen der Grundplatte 70 und dem abgesenkten Element verbleibenden Zwischenräume mit dem Gussmaterial gefüllt werden. Steht insbesondere die Auflagefläche der Mittel 20 um einen bestimmten Abstand über die Auflagefläche der Grundplatte 70 hervor, kann das Zentralelement beidseitig zumindest über einen Randbereich von Gussmaterial umhüllt werden. Wie in Figur 8 erkennbar, kann beispielsweise ein Lüfterrad für LKW's, ein Rad für Ventilatoren oder Ähnliches auf diese Art und Weise hergestellt werden. Der Rotationskörper 10 weist dabei eine Außenkontur 12 auf, welche beispielsweise im Wesentlichen kreisringförmig ausgebildet ist. Der Aufnahmeeinsatz 50 ist zunächst so ausgerichtet, dass seine Längsachse l_{A} durch den Mittelpunkt des durch die Außenkontur 12 gebildeten Kreises verläuft. Im Idealfalls ist eine rotationssymmetrische Masseverteilung des Rotationskörpers 10 um die durch den Mittelpunkt des durch die Außenkontur 12 gebildeten Kreises gegeben und ein Auswuchten des Rotationskörpers 10 nicht von Nöten. In einem solchen Fall verläuft die Rotationsachse R auch identisch zu der Achse durch den Mittelpunkt des durch die Außenkontur 12 gebildeten Kreises. In der Regel ist jedoch die Spritzgussform nicht ideal ausgebildet oder das Material verteilt sich nicht gleichmäßig in der Spritzgussform, sodass der Rotationskörper 10 eine Unwucht aufweist.

Mit den Mitteln 20 besteht jedoch die Möglichkeit, die Position der Rotationsachse R zu variieren, um eine Unwucht auszugleichen. Grundlegend dafür ist die Erkenntnis, dass bei identischer Werkzeugform und identischen Bedingungen des in die Werkzeugform eingefüllten Materials, beispielsweise gleicher Zusammensetzung und gleicher Temperatur, eine Unwucht immer an der gleichen relativen Position des Rotationskörpers 10 auftritt.

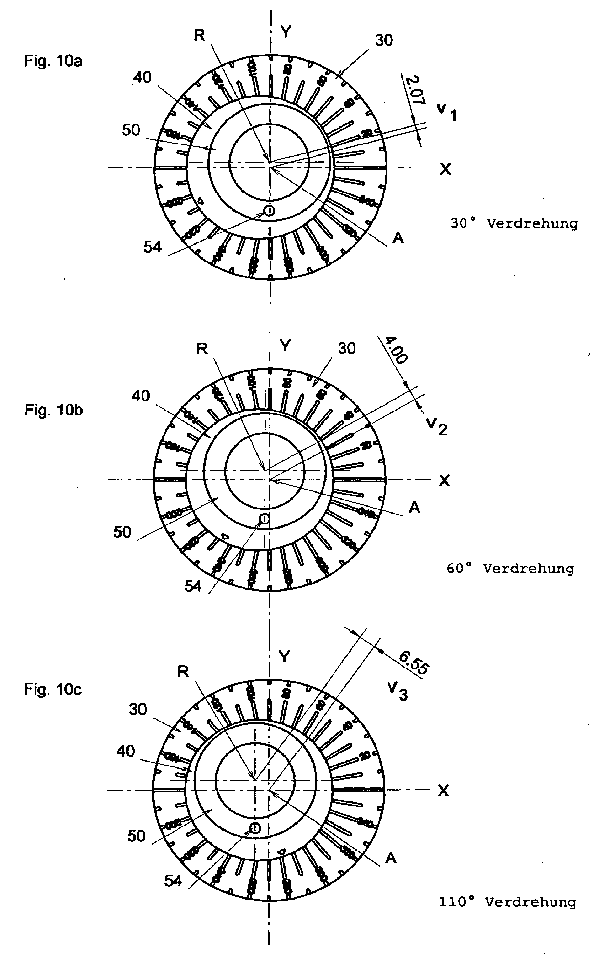

Die Mittel 20 und somit der Aufnahmeeinsatz 50, der Exzenterring 40 und Winkelring 30 werden somit zunächst derart relativ zueinander ausgerichtet, dass die durch den Aufnahmeeinsatz 50 definierte Rotationsachse R in einer Ausgangsposition A angeordnet ist, die beispielsweise den Nullpunkt eines kartesischen Koordinatensystems mit X-Achse und Y-Achse darstellt (vergleiche Figuren 10a bis 10C). Zudem ist diese Ausgangsposition A idealerweise derart gewählt, dass sie mit dem Mittelpunkt des durch die Außenkontur 12 des zu spritzenden Rotationskörpers 10 definierten Kreises zusammenfällt. Mit dieser Einstellung der Mittel 20 wird zunächst ein Test-Rotationskörper gespritzt. Der so erhaltene Test-Rotationskörper wird aus der Werkzeugform entnommen und die Unwucht dieses Test-Rotationskörpers wird bestimmt. Weist bereits der Test-Rotationskörper keine Unwucht auf, können mit der Werkzeugform beliebig viele weitere Rotationskörper 10 gespritzt werden, da bekannt ist, dass auch bei den weiteren Rotationskörpern 10 keine Unwucht auftritt, sofern die Gussbedingungen für die weiteren Rotationskörper 10 identisch sind.

In der Regel wird jedoch eine Unwucht an dem Test-Rotationskörper festgestellt. Es wird ermittelt, in welcher Richtung bzw. an welcher Stelle des Test-Rotationskörpers die Unwucht auftritt und wie groß sie ist. Da auch in nachfolgenden Gussverfahren die gleiche Masseverteilung des Gussmaterials innerhalb der Werkzeugform auftreten wird, sofern die Gussbedingungen konstant gehalten werden, kann die Unwucht ausgeglichen werden, indem die Position der Rotationsachse R entsprechend variiert wird, insbesondere in Richtung auf die Unwucht zu verschoben wird um einen Betrag, der eine symmetrische Masseverteilung in Bezug auf die Rotationsachse R herstellt.

Die Figuren 10a bis 10c zeigen Beispiele dafür, dass durch Verdrehen des Exzenterrings 40 in dem Winkelring 30 beispielsweise um etwa 30° zwischen der Rotationsachse R, welche durch die Längsachse l_{A} des Aufnahmeeinsatzes 50 definiert wird, und der Ausgangsposition A ein Versatz v₁, durch Verdrehen von etwa 60° einen Versatz v₂ und durch Verdrehen von 110° einen Versatz von v₃ erreicht werden kann. Bei Rotationskörpern mit Durchmessern von bis zu 1 m genügen dabei in der Regel Versätze von einigen Zehntel mm, um eine eventuell vorhandene Unwucht auszugleichen. Beispielsweise kann der Versatz v₁ 0,207 mm, der Versatz v₂ 0,4 mm und der Versatz v₃ 0,655 mm betragen. Die Relativdrehbewegung zwischen dem Exzenterring 40 und dem Winkelring 30 bestimmt die Größe des Versatzes, die Verdrehung des Winkelrings 30 gegenüber der Grundplatte 70 ermöglicht die Ausrichtung des Versatzes in die gewünschte Richtung zum Ausgleichen der Unwucht. Durch die Drehbewegung von dem Winkelring 30 und dem Exzenterring 40 kann die Rotationsachse R in gewissen Grenzen, die durch die Größe des Winkelrings 30, des Exzenterrings 40 und die Größe der Exzentrizitäten der exzentrisch angeordneten Durchgangsöffnungen 32, 42 gegeben sind, an jede beliebige Position des kartesischen Koordinatensystems bewegt werden.

Dadurch, dass der Aufnahmeeinsatz 50 über den Vorsprung 56 in der Nut 66 der Schlittenplatte 64 des Schlittens 60 gegen Rotation gesichert ist, ist jedoch sichergestellt, dass der Aufnahmeeinsatz 50 gegenüber der Grundplatte 70 und somit auch das Zentralelement 15 gegenüber der Grundplatte 70 gegen Rotation gesichert ist, sodass einerseits gleichbleibende Bedingungen für die nachfolgenden Herstellprozesse der Rotationskörper, andererseits die korrekte Ausrichtung des Zentralelements 50 innerhalb der Werkzeugform gewährleistet sind. Über den Schlitten 60 ist zudem gewährleistet, dass der Aufnahmeeinsatz 50 an jede beliebige Position innerhalb des kartesischen Koordinatensystems bewegt werden kann, ohne jedoch seine Orientierung relativ zu der Grundplatte 70 zu verlieren.

Nachdem somit ein Test-Rotationskörper mit der Rotationsachse R in der Ausgangsposition A hergestellt und dessen Unwucht bestimmt wurde, können nach Variieren der Positionen der Rotationsachse R derart, dass die Unwucht des Test-Rotationskörpers ausgeglichen wird, in Serie mehrere Rotationskörper 10 gespritzt werden, welche keine Unwucht aufweisen, sodass nachfolgende aufwändige Verfahrensschritte zum Auswuchten der Rotationskörper 10 entfallen.

### Bezugszeichenliste

- 10: Rotationskörper
- 12: Außenkontur
- 15: Zentralelement
- 17: erste Durchgangsöffnung
- 19: zweite Durchgangsöffnung

- 20: Mittel

- 30: Winkelring
- 32: erste exzentrische Durchgangsöffnung
- 34: Winkelmarkierung
- h_{W}: Höhe
- d_{W}: Außendurchmesser
- d₁: Innendurchmesser

- 40: Exzenterring
- 42: zweite exzentrische Durchgangsöffnung
- 44: Markierung
- h_{E}: Höhe
- d_{E}: Außendurchmesser
- d₂: Innendurchmesser

- 50: Aufnahmeeinsatz
- 52: Aufnahmevorsprung
- 54: Ausrichtvorsprung
- 56: Vorsprung
- l_{A}: Längsachse
- h_{A}: Höhe
- d_{A}: Außendurchmesser

- 60: Linearschlitten
- 62: Schlittentisch
- 64: Schlittenplatte
- 66: Nut

- 70: Grundplatte

- B: Bewegungsrichtung
- A: Ausgangsposition
- R: Rotationsachse
- V₁: Versatz
- V₂: Versatz
- V₃: Versatz

## Patentansprüche

1. Vorrichtung zum Herstellen eines Rotationskörpers (10) im Gussverfahren, wobei in der Vorrichtung (10) eine Rotationsachse (R) des Rotationskörpers (10) definiert ist, wobei Mittel (20) zur Variation der Position der Rotationsachse (R) in der Vorrichtung vorgesehen sind, wobei die Mittel (20) einen Winkelring (30) mit einer ersten exzentrischen Durchgangsöffnung (32), einen in der ersten exzentrischen Durchgangsöffnung (32) des Winkelrings (30) drehbar gelagert angeordneten Exzenterring (40) mit einer zweiten exzentrischen Durchgangsöffnung (42) und einen in der zweiten exzentrischen Durchgangsöffnung (42) des Exzenterrings (40) drehbar gelagert angeordneten Aufnahmeeinsatz (50) aufweisen, **dadurch gekennzeichnet, dass** die Mittel (20) einen Kreuzschlitten mit einem ersten Linearschlitten und zweiten Linearschlitten aufweisen, wobei die Rotationsachse (R) oder das die Rotationsachse (R) definierende Zentralelement mit einem der beiden Linearschlitten gekoppelt ist.

2. Vorrichtung nach Anspruch 1,
**dadurch gekennzeichnet, dass** die Rotationsachse (R) des Rotationskörpers (10) durch ein zu umgießendes Zentralelement (15) definiert ist, welches in die Vorrichtung eingesetzt und mit den Mitteln (20) zur Variation der Position der Rotationsachse gekoppelt ist.

3. Vorrichtung nach einem der vorhergehenden Ansprüche,
**dadurch gekennzeichnet, dass** der Exzenterring (40) in dem Winkelring (30) und der Aufnahmeeinsatz (50) in dem Exzenterring (40) formschlüssig angeordnet sind.

4. Vorrichtung nach einem der vorhergehenden Ansprüche,
**dadurch gekennzeichnet, dass** die Längsachse (l_{A}) des Aufnahmeeinsatzes (50) die Rotationsachse (R) definiert.

5. Vorrichtung nach einem der vorhergehenden Ansprüche,
**dadurch gekennzeichnet, dass** der Aufnahmeeinsatz (50) zur Halterung des Zentralelements (15) ausgebildet ist.

6. Vorrichtung nach einem der vorhergehenden Ansprüche,
**dadurch gekennzeichnet, dass** der Aufnahmeeinsatz (50) mit einem Linearschlitten (60) gekoppelt ist.

7. Vorrichtung nach einem der vorhergehenden Ansprüche,
**dadurch gekennzeichnet, dass** der Linearschlitten (60) eine Nut (66) quer zur Bewegungsrichtung (B) des Linearschlittens (60) aufweist, in welche ein Vorsprung (56) des Aufnahmeeinsatzes (50) gegen Rotation gesichert und entlang der Nut (66) linear verschiebbar eingreift.

8. Verwendung einer Vorrichtung nach einem der vorhergehenden Ansprüche in einem Verfahren zum Herstellen eines Rotationskörpers (10) im Gussverfahren.

9. Verfahren zum Herstellen eines Rotationskörpers (10) im Gussverfahren mit den Schritten:
- Herstellen eines Test-Rotationskörpers im Gussverfahren in einer Vorrichtung zum Herstellen eines Rotationskörpers, wobei in der Vorrichtung eine Rotationsachse (R) des Rotationskörpers definiert ist und wobei als Position der Rotationsachse (R) des Test-Rotationskörpers eine Ausgangsposition (A) gewählt wird,
- Bestimmen der Unwucht des Test-Rotationskörpers,
- Variieren der Position der Rotationsachse (R) innerhalb der Vorrichtung derart, dass die Unwucht des Test-Rotationskörpers ausgeglichen wird, wobei zur Variation der Position der Rotationsachse (R) eine Vorrichtung nach einem der Ansprüche 1 bis 7 verwendet wird,
- Herstellen des Rotationskörpers (10) im Gussverfahren in der Vorrichtung mit angepasster Position der Rotationsachse (R).

10. Verfahren nach Anspruch 9,
**dadurch gekennzeichnet, dass** zum Herstellen des Rotationskörpers (10) ein die Rotationsachse (R) des Rotationskörpers (10) definierendes Zentralelement (15) umgossen wird, wobei zur Variation der Position der Rotationsachse (R) die Position des Zentralelements (15) variiert wird.

11. Verfahren nach Anspruch 9 oder 10,
**dadurch gekennzeichnet, dass** das Herstellen eines Test-Rotationskörpers und das Herstellen des Rotationskörpers (10) abgesehen von der geänderten Position der Rotationsachse (R) unter im wesentlichen gleichen Bedingungen erfolgt.

12. Verfahren nach einem der Ansprüche 9 bis 11,
**dadurch gekennzeichnet, dass** in der Vorrichtung mit angepasster Position der Rotationsachse (R) mehrere Rotationskörper (10) hergestellt werden.

13. Verfahren nach einem der Ansprüche 9 bis 12,
**dadurch gekennzeichnet, dass** der Rotationskörper (10) im Kunststoffspritzgussverfahren hergestellt wird.

## Claims

1. An apparatus for producing a body of rotation (10) in the casting method, wherein an axis of rotation (R) of the body of rotation (10) is defined in the apparatus (10), wherein means (20) for varying the position of the axis of rotation (R) are provided in the apparatus, wherein the means (20) have an angle ring (30) with a first eccentric through opening (32), an eccentric ring (40) arranged so as to be mounted in a rotatable manner in the first eccentric through opening (32) of the angle ring (30) and having a second eccentric through opening (42), and a receiving insert (50) arranged so as to be mounted in a rotatable manner in the second eccentric through opening (42) of the eccentric ring (40), **characterized in that** the means (20) have a cross slide with a first linear slide and a second linear slide, wherein the axis of rotation (R) or the central element defining the axis of rotation (R) is coupled to one of the two linear slides.

2. An apparatus according to claim 1, **characterized in that** the axis of rotation (R) of the body of rotation (10) is defined by a central element (15) which is to have casting take place around it and which is inserted in the apparatus and which is coupled to the means (20) for varying the position of the axis of rotation.

3. An apparatus according to one of the preceding claims, **characterized in that** the eccentric ring (40) is arranged in a positively locking manner in the angle ring (30) and the receiving insert (50) is arranged in a positively locking manner in the eccentric ring (40).

4. An apparatus according to any one of the preceding claims, **characterized in that** the longitudinal axis (l_{A}) of the receiving insert (50) defines the axis of rotation (R).

5. An apparatus according to any one of the preceding claims, **characterized in that** the receiving insert (50) is designed in order to hold the central element (15).

6. An apparatus according to any one of the preceding claims, **characterized in that** the receiving insert (50) is coupled to a linear slide (60).

7. An apparatus according to any one of the preceding claims, **characterized in that** transversely to the direction of movement (B) of the linear slide (60) the linear slide (60) has a groove (66) into which a projection (56) of the receiving insert (50) engages whilst being prevented from rotating and being displaceable in a linear manner along the groove (66).

8. Use of an apparatus according to any one of the preceding claims in a method of producing a body of rotation (10) in the casting method.

9. A method of producing a body of rotation (10) in the casting method with the steps:
- producing a test body of rotation in the casting method in an apparatus for producing a body of rotation, wherein an axis of rotation (R) of the body of rotation is defined in the apparatus and wherein a starting position (A) is selected as the position of the axis of rotation (R) of the test body of rotation,
- determining the imbalance of the test body of rotation,
- varying the position of the axis of rotation (R) inside the apparatus in such a way that the imbalance of the test body of rotation is compensated, wherein an apparatus according to any one of claims 1 to 7 is used to vary the position of the axis of rotation (R),
- producing the body of rotation (10) in the casting method in the apparatus with the position of the axis of rotation (R) adapted.

10. A method according to claim 9, **characterized in that** a central element (15) which defines the axis of rotation (R) of the body of rotation (10) has casting take place around it in order to produce the body of rotation (10), wherein the position of the central element (15) is varied in order to vary the position of the axis of rotation (R).

11. A method according to claim 9 or 10, **characterized in that** the production of a test body of rotation and the production of the body of rotation (10) are carried out under substantially the same conditions apart from the altered position of the axis of rotation (R).

12. A method according to any one of claims 9 to 11, **characterized in that** a plurality of bodies of rotation (10) are produced in the apparatus with the position of the axis of rotation (R) adapted.

13. A method according to any one of claims 9 to 12, **characterized in that** the body of rotation (10) is produced in the plastics material injection-moulding method.

## Revendications

1. Dispositif pour réaliser un corps de révolution (10) par un procédé de coulée,
- le dispositif (10) définissant l'axe de rotation (R) du corps de révolution (10), ayant des moyens (20) pour modifier la position de l'axe de rotation (R) dans le dispositif,
- les moyens (20) comportent un anneau à graduation angulaire (30) ayant un premier orifice traversant (32) excentré, un anneau excentré (40) monté à rotation dans le premier orifice traversant excentré (32) de l'anneau à graduation angulaire (30) et cet anneau a un second orifice de passage excentré (42) et reçoit un insert de réception (50) monté à rotation dans le second orifice traversant excentré (42) de l'anneau excentré (40), dispositif **caractérisé en ce que**
les moyens (20) comportent un chariot à mouvements croisés ayant un premier chariot linéaire et un second chariot linéaire,
* l'axe de rotation (R) ou l'élément central définissant l'axe de rotation (R) étant couplé à l'un des deux chariots linéaires.

2. Dispositif selon la revendication 1,
**caractérisé en ce que**
l'axe de rotation (R) du corps de révolution (10) est défini par un élément central (15) à surmouler par coulée, placé dans le dispositif et couplé aux moyens (20) pour modifier la position de l'axe de rotation.

3. Dispositif selon l'une des revendications précédentes,
**caractérisé en ce que**
l'anneau excentré (40) est installé par une liaison par la forme dans l'anneau à graduation angulaire (30) et l'insert de réception (50) est installé de même dans l'anneau excentré (40).

4. Dispositif selon l'une des revendications précédentes,
**caractérisé en ce que**
l'axe longitudinal (l_{A}) de l'insert de réception (50) définit l'axe de rotation (R).

5. Dispositif selon l'une des revendications précédentes,
**caractérisé en ce que**
l'insert de réception (50) est réalisé pour tenir l'élément central (15).

6. Dispositif selon l'une des revendications précédentes,
**caractérisé en ce que**
l'insert de réception (50) est couplé à un chariot linéaire (60).

7. Dispositif selon l'une des revendications précédentes,
**caractérisé en ce que**
le chariot linéaire (60) comporte une rainure (66) dirigée transversalement à la direction de mouvement (B) du chariot linéaire (60) et recevant une partie en saillie (56) de l'insert de réception (50) bloqué en rotation et coulissant linéairement le long de la rainure (66).

8. Utilisation d'un dispositif selon l'une des revendications précédentes pour un procédé de réalisation d'un corps de révolution (10) par un procédé de coulée.

9. Procédé de réalisation d'un corps de révolution (10) par le procédé de coulée et comprenant les étapes suivantes :
- on réalise un corps de révolution de test par un procédé de coulée dans un dispositif pour la réalisation d'un corps de révolution, le dispositif définissant l'axe de rotation (R) du corps de révolution, et la position de l'axe de rotation (R) du corps de révolution de test étant choisie comme position de départ (A),
- on détermine le balourd du corps de révolution de test,
- on modifie la position de l'axe de rotation (R) dans le dispositif pour équilibrer le balourd du corps de révolution de test,
* pour modifier la position de l'axe de rotation (R), on utilise un dispositif selon l'une des revendications 1 à 7,
- on réalise le corps de révolution (10) par le procédé de coulée dans le dispositif avec une position adaptée de l'axe de rotation (R).

10. Procédé selon la revendication 9,
**caractérisé en ce que**
pour réaliser le corps de révolution (10), on surmoule par coulée un élément central (15) définissant l'axe de rotation (R) du corps de révolution (10),
* pour modifier la position de l'axe de rotation (R), on modifie la position de l'élément central (15).

11. Procédé selon la revendication 9 ou 10,
**caractérisé en ce que**
la réalisation d'un corps de révolution de test et la réalisation du corps de révolution (10) se font pratiquement dans des conditions identiques indépendamment de la modification de la position de l'axe de rotation (R) .

12. Procédé selon l'une des revendications 9 à 11,
**caractérisé en ce qu'**
on réalise plusieurs corps de révolution (10) dans le dispositif dont la position de l'axe de rotation (R) a été adaptée.

13. Procédé selon l'une des revendications 9 à 12,
**caractérisé en ce que**
le corps de révolution (10) est fabriqué par un procédé d'injection de matière plastique.
